# EUROPEAN PATENT APPLICATION

(11) **EP 4 768 536 A1**
(43) Date of publication of application: **01.07.2026**
(21) Application number: 24877076.0
(22) Date of filing: 02.10.2024
(51) Int. Cl.: C08L 23/08, C08J 3/12, C08J 5/18

(54) **COMPOSITION, PRODUCTION METHOD THEREFOR, RESIN PELLETS, MODIFIER FOR ENGINEERING PLASTICS, ENGINEERING PLASTIC COMPOSITION, AND MOLDED OBJECT**

(30) Priority: 13.10.2023 JP 2023177370
(71) Applicant: SUMITOMO CHEMICAL COMPANY, LIMITED, Tokyo 103-6020 (JP)
(72) Inventor: KITAGAWA, Sho, Ichihara-shi, Chiba 299-0195 (JP)
(74) Representative: Vossius & Partner Patentanwälte Rechtsanwälte mbB
(86) International application number: PCT/JP2024/035284
(87) International publication number: WO 2025/079478

(57) **Abstract**

A composition containing an olefin-based copolymer A and an olefin-based copolymer B, wherein the olefin-based copolymer A has a main chain including a monomer unit a derived from an olefin monomer having 2 to 8 carbon atoms and a monomer unit b having a glycidyl group, and, based on the mass of the olefin-based copolymer A, the proportion of the monomer unit a is 94% by mass or more and the proportion of the monomer unit b is less than 6% by mass, the olefin-based copolymer B has a monomer unit derived from an olefin monomer having 2 to 8 carbon atoms, and the content of the olefin-based copolymer A is 20% by mass or more and 99% by mass or less, based on the total mass of the olefin-based copolymer A and the olefin-based copolymer B.

## Description

### Technical Field

The present invention relates to a composition and a method for producing the same, a resin pellet, a modifier for engineering plastic, an engineering plastic composition, and a molded article.

### Background Art

Conventionally, modifiers that are blended into engineering plastics to improve or modify various properties of engineering plastics are known. For example, Patent Literature 1 describes a resin composition including: (A) 5 to 95 parts by mass of a polyphenylene ether-based resin or a mixture of the resin and a polystyrene-based resin; (B) 95 to 5 parts by mass of a saturated polyester; and (C) a graft-modified olefin-based resin obtained by preparing an aqueous suspension containing (a) 100 parts of an olefin-based resin, (b) 0.1 to 30 parts of a compound represented by a prescribed formula, or a modifier including the compound and glycidyl methacrylate, or glycidyl methacrylate, (c) 0.1 to 500 parts of a vinyl monomer, and (d) 0.001 to 10 parts of a radical polymerization initiator per 100 parts of the total amount of (b) and (c), impregnating (a) with (b) and (c) in the aqueous suspension, and polymerizing the same, in an amount of 1 to 100 parts per 100 parts of (A) and (B).

### Citation List

### Patent Literature

[Patent Literature 1] Japanese Unexamined Patent Publication No. H08-259798

### Summary of Invention

### Technical Problem

One aspect of the present invention relates to a composition capable of providing an engineering plastic composition having a low dielectric loss tangent and high toughness when used as a modifier for engineering plastic.

### Solution to Problem

In some aspects of the present invention, the following [1] to [16] are provided.
[1] A composition including an olefin-based copolymer A and an olefin-based copolymer B,
   wherein the olefin-based copolymer A has a main chain including a monomer unit a derived from an olefin monomer having 2 to 8 carbon atoms and a monomer unit b having a glycidyl group, and, based on the mass of the olefin-based copolymer A, the proportion of the monomer unit a is 94% by mass or more and the proportion of the monomer unit b is less than 6% by mass,
   the olefin-based copolymer B has a monomer unit derived from an olefin monomer having 2 to 8 carbon atoms, and
   the content of the olefin-based copolymer A is 20% by mass or more and 99% by mass or less, based on the total mass of the olefin-based copolymer A and the olefin-based copolymer B.
[2] The composition according to [1], wherein the content of the olefin-based copolymer A is 30 to 99% by mass, based on the total mass of the olefin-based copolymer A and the olefin-based copolymer B.
[3] The composition according to [1] or [2], wherein the monomer unit a is a monomer unit derived from ethylene, a monomer unit derived from an α-olefin, or a combination thereof.
[4] The composition according to any one of [1] to [3], wherein the monomer unit a is a monomer unit derived from ethylene.
[5] The composition according to any one of [1] to [4], wherein the monomer unit b is a monomer unit derived from an unsaturated carboxylic acid glycidyl ester, a monomer unit derived from a glycidyl ether having an unsaturated group, or a combination thereof.
[6] The composition according to any one of [1] to [5], wherein the monomer unit b is a monomer unit derived from glycidyl (meth)acrylate.
[7] The composition according to any one of [1] to [6], wherein the olefin-based copolymer B consists of a monomer unit derived from ethylene and a monomer unit derived from an olefin monomer having 3 to 8 carbon atoms.
[8] The composition according to any one of [1] to [7], wherein the olefin-based copolymer B consists of a monomer unit derived from ethylene and a monomer unit derived from an olefin monomer having 5 to 8 carbon atoms.
[9] The composition according to any one of [1] to [8], wherein the density of the olefin-based copolymer B is less than 0.910 g/cm³.
[10] A method for producing the composition according to any one of [1] to [9], the method including a step of melt-kneading the olefin-based copolymer A and the olefin-based copolymer B.
[11] A resin pellet including the composition according to any one of [1] to [9].
[12] A modifier for engineering plastic, comprising the composition according to any one of [1] to [9].
[13] An engineering plastic composition including:
   the composition according to any one of [1] to [9]; and
   an engineering plastic.
[14] A molded article including the engineering plastic composition according to [13].
[15] The molded article according to [14], which is a member of an automobile part.
[16] The molded article according to [14], which is a member of an electrical/electronic component.

### Advantageous Effects of Invention

According to the present invention, it is possible to provide a composition capable of providing an engineering plastic composition having a low dielectric loss tangent and high toughness when used as a modifier for engineering plastic.

### Description of Embodiments

Hereinafter, some examples of the present invention will be described in detail. However, the present invention is not limited to the following examples.

A composition according to one embodiment of the present invention contains an olefin-based copolymer A and an olefin-based copolymer B. The olefin-based copolymer A has a main chain including a monomer unit a derived from an olefin monomer having 2 to 8 carbon atoms and a monomer unit b having a glycidyl group, and, based on the mass of the olefin-based copolymer A, the proportion of the monomer unit a is 94% by mass or more and the proportion of the monomer unit b is less than 6% by mass. The olefin-based copolymer B has a monomer unit derived from an olefin monomer having 2 to 8 carbon atoms. In the composition, the content of the olefin-based copolymer A is 20% by mass or more and 99% by mass or less, based on the total mass of the olefin-based copolymer A and the olefin-based copolymer B.

### <Olefin-Based Copolymer A>

The olefin-based copolymer A has a main chain including a monomer unit a derived from an olefin monomer having 2 to 8 carbon atoms and a monomer unit b having a glycidyl group, and, based on the mass of the olefin-based copolymer A, the proportion of the monomer unit a is 94% by mass or more and the proportion of the monomer unit b is less than 6% by mass.

The monomer unit a derived from an olefin monomer having 2 to 8 carbon atoms may be a monomer unit derived from ethylene, a monomer unit derived from an α-olefin, or a combination thereof, or may be a monomer unit derived from ethylene, from the viewpoint of facilitating obtaining an engineering plastic composition having a low dielectric loss tangent and high toughness when used as a modifier for engineering plastic. Examples of α-olefins include linear olefins such as propylene, 1-butene, 1-pentene, 1-hexene, 1-heptene, and 1-octene; cyclic olefins such as norbornene, 5-methylnorbomene, and 1-methylnorbomene; and aromatic olefins such as styrene, methylstyrene, and divinylbenzene.

The proportion of the monomer unit a (or the total proportion of the monomer unit derived from ethylene and the monomer unit derived from an α-olefin) is 94% by mass or more, based on the mass of the olefin-based copolymer A, from the viewpoint of facilitating obtaining an engineering plastic composition having a low dielectric loss tangent and high toughness when used as a modifier for engineering plastic, and may be 95% by mass or more, 96% by mass or more, 97% by mass or more, or 97.5% by mass or more. The proportion of the monomer unit a (or the total proportion of the monomer unit derived from ethylene and the monomer unit derived from an α-olefin) may be 99.9% by mass or less, 99% by mass or less, 98.5% by mass or less, or 98% by mass or less, based on the mass of the olefin-based copolymer A. From these viewpoints, the proportion of the monomer unit a (or the total proportion of the monomer unit derived from ethylene and the monomer unit derived from an α-olefin) may be 94 to 99.9% by mass or 95 to 99% by mass, based on the mass of the olefin-based copolymer A.

The monomer unit b derived from a monomer having a glycidyl group may be a monomer unit derived from an unsaturated carboxylic acid glycidyl ester, a monomer unit derived from a glycidyl ether having an unsaturated group, or a combination thereof, or may be a monomer unit derived from an unsaturated carboxylic acid glycidyl ester, from the viewpoint of facilitating obtaining an engineering plastic composition having a low dielectric loss tangent and high toughness when used as a modifier for engineering plastic. The monomer unit b is present at least in the main chain of the olefin-based copolymer. The monomer unit b need not be present at the terminal of the olefin-based copolymer.

The unsaturated carboxylic acid glycidyl ester from which the monomer unit b is derived may be a compound represented by the following formula (1), from the viewpoint of facilitating obtaining an engineering plastic composition having a low dielectric loss tangent and high toughness when used as a modifier for engineering plastic. In formula (1), R¹ represents an alkenyl group having 2 to 18 carbon atoms, and the alkenyl group may have one or more substituents. Examples of compounds represented by formula (1) include glycidyl acrylate, glycidyl methacrylate, and glycidyl itaconate.

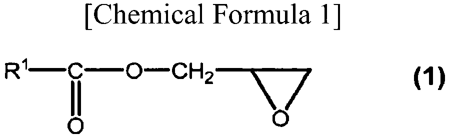

The glycidyl ether having an unsaturated group from which the monomer unit b is derived may be a compound represented by the following formula (2), from the viewpoint of facilitating obtaining an engineering plastic composition having a low dielectric loss tangent and high toughness when used as a modifier for engineering plastic. In formula (2), R² represents an alkenyl group having 2 to 18 carbon atoms, and the alkenyl group may have one or more substituents. X represents CH₂-O (wherein CH₂ is bonded to R²) or an oxygen atom. Examples of compounds represented by formula (2) include allyl glycidyl ether, 2-methylallyl glycidyl ether, and styrene-p-glycidyl ether.

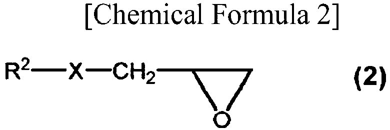

The proportion of the monomer unit b may be 0.1% by mass or more, 0.5% by mass or more, 1% by mass or more, 1.5% by mass or more, 2% by mass or more, or 2.2% by mass or more, based on the mass of the olefin-based copolymer A. The proportion of the monomer unit b may be less than 6% by mass, 5.5% by mass or less, 5% by mass or less, 4% by mass or less, 3.5% by mass or less, 3% by mass or less, 2.5% by mass or less, or 2.3% by mass or less, based on the mass of the olefin-based copolymer A, from the viewpoint of facilitating obtaining an engineering plastic composition having a low dielectric loss tangent and high toughness when used as a modifier for engineering plastic. From these viewpoints, the proportion of the monomer unit b may be 0.1% by mass or more and less than 6% by mass, or 0.5 to 5.5% by mass, based on the mass of the olefin-based copolymer A.

The mass ratio of the monomer unit b to the monomer unit a (proportion of monomer unit b / proportion of monomer unit a) may be 0.001 or more, 0.005 or more, 0.01 or more, 0.015 or more, or 0.02 or more, from the viewpoint of facilitating obtaining an engineering plastic composition having a low dielectric loss tangent and high toughness when used as a modifier for engineering plastic. The mass ratio of the monomer unit b to the monomer unit a (proportion of monomer unit b / proportion of monomer unit a) may be 0.06 or less, 0.05 or less, 0.04 or less, 0.03 or less, or 0.025 or less, from the viewpoint of facilitating obtaining an engineering plastic composition having a low dielectric loss tangent and high toughness when used as a modifier for engineering plastic. From these viewpoints, the mass ratio of the monomer unit b to the monomer unit a (proportion of monomer unit b / proportion of monomer unit a) may be 0.001 to 0.06 or 0.005 to 0.05.

The main chain of the olefin-based copolymer A may or may not further include a monomer unit c derived from a (meth)acrylic acid ester or a vinyl ether (excluding a monomer unit corresponding to the monomer unit b). "(Meth)acrylate" means acrylate or methacrylate, and the same applies to similar compounds.

Examples of (meth)acrylic acid esters include methyl (meth)acrylate, ethyl (meth)acrylate, propyl (meth)acrylate, and butyl (meth)acrylate. Examples of vinyl ethers include methyl vinyl ether, ethyl vinyl ether, propyl vinyl ether, and phenyl vinyl ether.

The proportion of the monomer unit c may be 3% by mass or less, 2% by mass or less, 1% by mass or less, less than 1% by mass, 0.5% by mass or less, or 0.1% by mass or less, based on the mass of the olefin-based copolymer A, from the viewpoint of facilitating obtaining an engineering plastic composition having a low dielectric loss tangent and high toughness when used as a modifier for engineering plastic. The proportion of the monomer unit c may be 0% by mass, based on the mass of the olefin-based copolymer A.

The total proportion of the monomer unit b and the monomer unit c may be less than 6% by mass, 5.5% by mass or less, 5% by mass or less, 4.5% by mass or less, 4% by mass or less, 3.5% by mass or less, 3% by mass or less, 2.7% by mass or less, 2.5% by mass or less, or 2.3% by mass or less, based on the mass of the olefin-based copolymer A, from the viewpoint of facilitating obtaining an engineering plastic composition having a low dielectric loss tangent and high toughness when used as a modifier for engineering plastic. The total proportion of the monomer unit b and the monomer unit c may be more than 0% by mass, 0.1% by mass or more, 0.5% by mass or more, 1% by mass or more, 1.5% by mass or more, 1.8% by mass or more, 2% by mass or more, or 2.2% by mass or more, based on the mass of the olefin-based copolymer A. From these viewpoints, the total proportion of the monomer unit b and the monomer unit c may be more than 0% by mass and less than 6% by mass, or 0.1 to 5.5% by mass, based on the mass of the olefin-based copolymer A.

The mass ratio of the monomer unit c to the monomer unit b (proportion of monomer unit c / proportion of monomer unit b) may be 0.1 or less, 0.05 or less, or 0.01 or less, from the viewpoint of facilitating obtaining an engineering plastic composition having a low dielectric loss tangent and high toughness when used as a modifier for engineering plastic. The mass ratio of the monomer unit c to the monomer unit b (proportion of monomer unit c / proportion of monomer unit b) may be 0.

Examples of olefin-based copolymers A include an ethylene-glycidyl (meth)acrylate copolymer, an ethylene-glycidyl (meth)acrylate-methyl (meth)acrylate copolymer, an ethylene-glycidyl (meth)acrylate-ethyl (meth)acrylate copolymer, an ethylene-glycidyl (meth)acrylate-n-propyl (meth)acrylate copolymer, an ethylene-glycidyl (meth)acrylate-isopropyl (meth)acrylate copolymer, an ethylene-glycidyl (meth)acrylate-n-butyl (meth)acrylate copolymer, an ethylene-glycidyl (meth)acrylate-isobutyl (meth)acrylate copolymer, and an ethylene-glycidyl (meth)acrylate-vinyl ether copolymer. The olefin-based copolymer A may be an ethylene-glycidyl (meth)acrylate copolymer.

The olefin-based copolymer A can be synthesized by various methods. The olefin-based copolymer A can be produced, for example, by bulk polymerization using a free radical initiator, emulsion polymerization, solution polymerization, or the like. One representative example of a polymerization method for synthesizing the olefin-based copolymer A is a method of copolymerizing an olefin monomer having 2 to 8 carbon atoms, a monomer having a glycidyl group, and, if necessary, a (meth)acrylic acid ester or a vinyl ether, in the presence of a polymerization initiator that generates free radicals, under conditions of a polymerization pressure of 500 kg/cm² or more and a polymerization temperature of 40 to 300°C. The polymerization pressure may be 1000 kg/cm² or more and may be 2000 kg/cm² or less. The polymerization temperature may be 100 to 250°C, or 150 to 200°C. In the synthesis of the olefin-based copolymer A, since the olefin monomer having 2 to 8 carbon atoms, the monomer having a glycidyl group, and, if necessary, the (meth)acrylic acid ester or vinyl ether are randomly copolymerized, the olefin monomer having 2 to 8 carbon atoms and the monomer having a glycidyl group are present at least in the main chain.

The melt flow rate (MFR) of the olefin-based copolymer A may be 0.2 g/10 min or more, 0.5 g/10 min or more, 1 g/10 min or more, 1.5 g/min or more, 2 g/10 min or more, 2.5 g/10 min or more, or 3 g/10 min or more. The melt flow rate (MFR) of the olefin-based copolymer A may be 300 g/10 min or less, 250 g/10 min or less, 220 g/10 min or less, or 200 g/10 min or less, and may be 0.2 to 300 g/10 min, 0.5 to 250 g/10 min, or 1 to 220 g/10 min. The MFR of the olefin-based copolymer A can be measured in accordance with JIS K7210 under conditions of a temperature of 190°C and a load of 2.16 kgf.

The content of the olefin-based copolymer A is 20% by mass or more and 99% by mass or less, based on the total mass of the olefin-based copolymer A and the olefin-based copolymer B. The content of the olefin-based copolymer A may be 90% by mass or less, 80% by mass or less, 75% by mass or less, 70% by mass or less, 65% by mass or less, 60% by mass or less, 55% by mass or less, or 50% by mass or less, based on the total mass of the olefin-based copolymer A and the olefin-based copolymer B, from the viewpoint of facilitating the achievement of a low dielectric loss tangent. The content of the olefin-based copolymer A may be 25% by mass or more, 30% by mass or more, 40% by mass or more, or 50% by mass or more, based on the total mass of the olefin-based copolymer A and the olefin-based copolymer B. The content of the olefin-based copolymer A may be 25 to 99% by mass, 30 to 99% by mass, 30 to 90% by mass, 30 to 80% by mass, or 30 to 75% by mass, based on the total mass of the olefin-based copolymer A and the olefin-based copolymer B.

The content of the olefin-based copolymer A may be 99% by mass or less, 90% by mass or less, 80% by mass or less, 75% by mass or less, 70% by mass or less, 65% by mass or less, 60% by mass or less, 55% by mass or less, or 50% by mass or less, based on the total mass of the composition, from the viewpoint of facilitating the achievement of a low dielectric loss tangent. The content of the olefin-based copolymer A may be 20% by mass or more, 25% by mass or more, 30% by mass or more, 40% by mass or more, or 50% by mass or more, based on the total mass of the composition. From these viewpoints, the content of the olefin-based copolymer A may be 20 to 99% by mass, 25 to 90% by mass, or 30 to 80% by mass, based on the total mass of the composition.

The mass ratio of the content of the olefin-based copolymer A to the content of the olefin-based copolymer B (content of olefin-based copolymer A / content of olefin-based copolymer B) may be 5 or less, 4 or less, 3 or less, 2 or less, 1.5 or less, or 1 or less, from the viewpoint of facilitating the achievement of a low dielectric loss tangent. The mass ratio of the content of the olefin-based copolymer A to the content of the olefin-based copolymer B may be 0.1 or more, 0.2 or more, or 0.3 or more. From these viewpoints, the mass ratio of the content of the olefin-based copolymer A to the content of the olefin-based copolymer B may be 0.1 to 5, 0.2 to 3, or 0.3 to 1.5.

### <Olefin-Based Copolymer B>

The olefin-based copolymer B has a monomer unit derived from an olefin monomer having 2 to 8 carbon atoms. The olefin-based copolymer B may be a copolymer that has a monomer unit derived from an olefin monomer having 2 to 8 carbon atoms and does not correspond to the olefin-based copolymer A.

The monomer unit derived from an olefin monomer having 2 to 8 carbon atoms may be a monomer unit derived from ethylene, a monomer unit derived from an α-olefin, or a combination thereof, or may be a monomer unit derived from ethylene. Examples of α-olefins include linear olefins such as propylene, 1-butene, 1-pentene, 1-hexene, 1-heptene, and 1-octene; cyclic olefins such as norbornene, 5-methylnorbomene, and 1-methylnorbornene; and aromatic olefins such as styrene, methylstyrene, and divinylbenzene.

The olefin-based copolymer B may be an ethylene-α-olefin copolymer having a monomer unit derived from ethylene and a monomer unit derived from an α-olefin, from the viewpoint of facilitating obtaining an engineering plastic composition having a low dielectric loss tangent and high toughness when used as a modifier for engineering plastic. From the same viewpoint, the olefin-based copolymer B may be a copolymer consisting of a monomer unit derived from ethylene and a monomer unit derived from an olefin monomer having 3 to 8 carbon atoms, may be a copolymer consisting of a monomer unit derived from ethylene and a monomer unit derived from an olefin monomer having 4 to 8 carbon atoms, or may be a copolymer consisting of a monomer unit derived from ethylene and a monomer unit derived from an olefin monomer having 5 to 8 carbon atoms.

Examples of olefin-based copolymers B include an ethylene-propylene copolymer, an ethylene-butene copolymer, an ethylene-hexene copolymer, an ethylene-octene copolymer, an ethylene-decene copolymer, and an ethylene-(3-methyl-1-butene) copolymer.

The MFR of the olefin-based copolymer B may be 0.1 g/10 min or more, 0.5 g/10 min or more, or 1 g/10 min or more, and may be 50 g/10 min or less, 20 g/10 min or less, or 10 g/10 min or less, and may be 0.1 to 50 g/10 min, 0.5 to 20 g/10 min, or 1 to 10 g/10 min.

The density of the olefin-based copolymer B may be 0.950 g/cm³ or less, 0.920 g/cm³ or less, 0.910 g/cm³ or less, less than 0.910 g/cm³, 0.900 g/cm³ or less, 0.890 g/cm³ or less, 0.880 g/cm³ or less, 0.870 g/cm³ or less, or 0.860 g/cm³ or less, from the viewpoint of facilitating obtaining an engineering plastic composition having high toughness. The density of the olefin-based copolymer B may be 0.800 g/cm³ or more, 0.830 g/cm³ or more, 0.840 g/cm³ or more, or 0.850 g/cm³ or more. From these viewpoints, the density of the olefin-based copolymer B may be 0.800 to 0.950 g/cm³, 0.830 to 0.920 g/cm³, or 0.840 to 0.910 g/cm³.

The content of the olefin-based copolymer B is 20% by mass or more and 99% by mass or less, based on the total mass of the olefin-based copolymer A and the olefin-based copolymer B. The content of the olefin-based copolymer A may be 10% by mass or more, 20% by mass or more, 25% by mass or more, 30% by mass or more, 35% by mass or more, 40% by mass or more, 45% by mass or more, or 50% by mass or more, based on the total mass of the olefin-based copolymer A and the olefin-based copolymer B, from the viewpoint of facilitating the achievement of a low dielectric loss tangent. The content of the olefin-based copolymer B may be 75% by mass or less, 70% by mass or less, 60% by mass or less, or 50% by mass or less, based on the total mass of the olefin-based copolymer A and the olefin-based copolymer B, from the viewpoint of facilitating obtaining an engineering plastic composition having a low dielectric loss tangent and high toughness when used as a modifier for engineering plastic. From these viewpoints, the content of the olefin-based copolymer B may be 10 to 75% by mass, 20 to 70% by mass, or 25 to 60% by mass, based on the total mass of the olefin-based copolymer A and the olefin-based copolymer B.

The content of the olefin-based copolymer B may be 1% by mass or more, 10% by mass or more, 20% by mass or more, 25% by mass or more, 30% by mass or more, 35% by mass or more, 40% by mass or more, 45% by mass or more, or 50% by mass or more, based on the total mass of the composition, from the viewpoint of facilitating the achievement of a low dielectric loss tangent. The content of the olefin-based copolymer B may be less than 80% by mass, 75% by mass or less, 70% by mass or less, 60% by mass or less, or 50% by mass or less, based on the total mass of the composition. From these viewpoints, the content of the olefin-based copolymer B may be 1% by mass or more and less than 80% by mass, 20 to 70% by mass, or 30 to 50% by mass, based on the total mass of the composition.

The dielectric loss tangent of the composition may be 0.0085 or less, 0.0080 or less, 0.0070 or less, 0.0065 or less, or 0.0060 or less, from the viewpoint of facilitating obtaining an engineering plastic composition having a particularly low dielectric loss tangent. The dielectric loss tangent of the composition may be 0.0010 or more, 0.0015 or more, or 0.0020 or more. From these viewpoints, the dielectric loss tangent of the composition may be 0.0010 to 0.0085, 0.0015 to 0.0080, or 0.0020 to 0.0070.

The composition may further contain additives such as a compatibilizer, an antioxidant, a heat stabilizer, an ultraviolet absorber, an anti-coloring agent, a plasticizer, a flame retardant, a plasticizer, a mold release agent, an antistatic agent, and a colorant.

The composition can be obtained, for example, by a method including melt-kneading a mixture containing the olefin-based copolymer A, the olefin-based copolymer B, and additives added as necessary. That is, another embodiment of the present invention is a method for producing the above-described composition, including a step of melt-kneading the olefin-based copolymer A and the olefin-based copolymer B.

The melt-kneading can be performed using, for example, a single-screw kneader, a twin-screw kneader, or a Laboplastomill. Examples of twin-screw kneaders include a co-rotating twin-screw kneading extruder.

The maximum temperature of the mixture to be melt-kneaded may be 50 to 350°C, 80 to 320°C, 100 to 300°C, 120 to 280°C, or 150 to 250°C.

The kneading time of the melt-kneading may be 1 to 1800 seconds, 10 to 1200 seconds, or 30 to 600 seconds.

The composition can be used, for example, in the form of resin pellets. That is, another embodiment of the present invention is a resin pellet including the above-described composition.

The shape of the resin pellet is not particularly limited. The resin pellet may further contain additives such as a compatibilizer, an antioxidant, a heat stabilizer, an ultraviolet absorber, an anti-coloring agent, a plasticizer, a flame retardant, a plasticizer, a mold release agent, an antistatic agent, and a colorant, in addition to the above-described composition.

The composition can be used as a modifier for engineering plastic for improving various properties (for example, impact resistance) of engineering plastic. That is, another embodiment of the present invention is a modifier for engineering plastic, including the above-described composition.

An engineering plastic composition including the above-described composition, resin pellets, or modifier for engineering plastic, and an engineering plastic can be obtained, for example, by a method including melt-kneading a mixture containing the above-described composition, resin pellets, or modifier for engineering plastic, and an engineering plastic. The engineering plastic composition may include a continuous phase containing the engineering plastic and particles containing the olefin-based copolymer A and/or the olefin-based copolymer B dispersed in the continuous phase.

Engineering plastic refers to a plastic having a deflection temperature under load of 100°C or more as measured in accordance with ASTM D648, a tensile strength of 50 MPa as measured in accordance with ASTM D638, and a flexural modulus of 2.4 GPa or more as measured in accordance with ASTM D790. Plastics with a heat resistance of 150°C or more are referred to as specialty engineering plastics or super engineering plastics, but in the present specification, specialty engineering plastics and super engineering plastics are also included in engineering plastics.

Examples of engineering plastics include polybutylene terephthalate (PBT), polyphenylene sulfide (PPS), polycarbonate, polyethylene terephthalate, liquid crystal polymer, polyether sulfone, polyamide, polyphthalamide, polyketone, polyether ketone, polyether ether ketone, polyacetal, and polysulfone. The engineering plastic composition may be substantially free of polyethylene terephthalate resin, and the content of polyethylene terephthalate may be less than 1% by mass, based on the mass of the engineering plastic in the engineering plastic composition. The polyethylene terephthalate resin referred to herein also includes modified products in which a part of the monomer units derived from terephthalic acid is replaced with monomer units derived from dicarboxylic acids other than terephthalic acid or the like.

The engineering plastic composition may further contain other components such as a resin component (excluding those corresponding to the above-described olefin-based copolymer A and olefin-based copolymer B), a filler, an antioxidant, a heat stabilizer, an ultraviolet absorber, an anti-coloring agent, a plasticizer, a flame retardant, a plasticizer, a mold release agent, an antistatic agent, and a colorant, which are added separately from the above-described composition, resin pellet, or modifier for engineering plastic.

The dielectric loss tangent of the engineering plastic composition may be 0.0055 or less. The dielectric loss tangent of the engineering plastic composition may be 0.001 or more, 0.002 or more, 0.003 or more, 0.004 or more, or 0.005 or more. The dielectric loss tangent of the engineering plastic composition may be 0.001 to 0.0055. The dielectric loss tangent of the engineering plastic composition can be measured by the method described in the Examples below.

The Izod impact strength of the engineering plastic composition at 23°C may be 7.5 kJ/m² or more, 10 kJ/m² or more, or 11 kJ/m² or more. The Izod impact strength of the engineering plastic composition at 23°C may be 40 kJ/m² or less, or 35 kJ/m² or less. The Izod impact strength of the engineering plastic composition at 23°C may be 7.5 to 40 kJ/m². The Izod impact strength of the engineering plastic composition at 23°C can be measured by the method described in the Examples below.

The tensile elongation at break of the engineering plastic composition may be 30% or more, 35% or more, or 40% or more. The tensile elongation at break of the engineering plastic composition can be measured by the method described in the Examples below.

The content of the olefin-based copolymer A may be 1% by mass or more, 2% by mass or more, or 2.5% by mass or more, based on the total mass of the engineering plastic composition. The content of the olefin-based copolymer A may be 30% by mass or less, 20% by mass or less, 15% by mass or less, or 10% by mass or less, based on the total mass of the engineering plastic composition. The content of the olefin-based copolymer A may be 1 to 30% by mass, based on the total mass of the engineering plastic composition.

The content of the olefin-based copolymer B may be 1% by mass or more, 2% by mass or more, or 2.5% by mass or more, based on the total mass of the engineering plastic composition. The content of the olefin-based copolymer B may be 30% by mass or less, 20% by mass or less, 15% by mass or less, or 10% by mass or less, based on the total mass of the engineering plastic composition. The content of the olefin-based copolymer B may be 1 to 30% by mass, based on the total mass of the engineering plastic composition.

The content of the engineering plastic may be 50% by mass or more, 60% by mass or more, 70% by mass or more, 80% by mass or more, or 90% by mass or more, based on the total mass of the engineering plastic composition. The content of the engineering plastic may be 95% by mass or less or 90% by mass or less, based on the total mass of the engineering plastic composition. The content of the engineering plastic may be 50 to 95% by mass, based on the total mass of the engineering plastic composition.

The engineering plastic composition can be molded by any molding method such as injection molding, extrusion molding, vacuum molding, and blow molding to obtain a molded article of the engineering plastic composition. The resulting molded article has a low dielectric loss tangent and high toughness, and may be, for example, a member of an automobile part or a member of an electrical/electronic component.

### [Examples]

Hereinafter, the invention will be specifically described based on Examples. However, the present invention is not limited to the following Examples.

### 1. Raw Materials

The following were prepared as raw materials. The olefin-based copolymer A, the olefin-based copolymer B, and the engineering plastic were each prepared as resin pellets.
(A) Olefin-Based Copolymer A
   · EGMA-1 (a random copolymer of 97.7 parts by mass of ethylene and 2.3 parts by mass of glycidyl methacrylate, MFR = 3 g/10 min, polymerization pressure: 1356 kg/cm², polymerization temperature: 196°C)
   · EGMA-2 (a random copolymer of 94.0 parts by mass of ethylene and 6.0 parts by mass of glycidyl methacrylate, MFR = 3 g/10 min, polymerization pressure: 1346 kg/cm², polymerization temperature: 194°C)
(B) Olefin-Based Copolymer B
   · B-1 (ethylene-octene copolymer, MFR = 1 g/10 min, density: 0.857 g/cm³)
   · B-2 (ethylene-butene copolymer, MFR = 0.2 g/10 min, density: 0.858 g/cm³)
   · B-3 (ethylene-hexene copolymer, MFR = 2 g/10 min, density: 0.898 g/cm³)
(C) Engineering Plastic
   · Polybutylene terephthalate (PBT): Toraycon 1401 X06 (trade name, manufactured by Toray Industries, Inc., intrinsic viscosity: 1.74)

### 2. Production of Molded Article A

### (Example 1)

The temperatures of the nine barrels C1 to C9 provided along the extrusion direction from the hopper side of the twin-screw kneading extruder were set as follows.
C1: 50°C
C2: 100°C
C3 to C9: 190°C

Into the hopper port provided at barrel C1 of the twin-screw kneading extruder (KZW20TW, manufactured by Technovel Corporation), 75 parts by mass of EGMA-1 were fed from the main feeder and 25 parts by mass of B-1 (ethylene-octene copolymer, MFR = 1 g/10 min, density: 0.857 g/cm³) were fed from the sub-feeder. The nozzle head temperature was set to 190°C and the screw rotation speed was set to 300 rpm, and EGMA-1 and B-1 were melt-kneaded. The melt-kneaded product was discharged from the twin-screw extruder at a discharge rate of 3 kg/hour, and the melt-kneaded product was cut with a pelletizer to obtain resin pellets of a composition containing EGMA-1 and B-1.

The produced resin pellets were heated at 190°C for 10 minutes using a vacuum press (IMC-19E6 type, manufactured by Imoto Machinery Co., Ltd.) and then cooled at 30°C for 5 minutes to produce a sheet-shaped molded article A having a thickness of 1.0 mm.

### (Example 2)

A molded article A was produced in the same manner as in Example 1, except that the amount of EGMA-1 was changed to 50 parts by mass and the amount of B-1 was changed to 50 parts by mass.

### (Example 3)

A molded article A was produced in the same manner as in Example 2, except that B-2 was used instead of B-1.

### (Example 4)

A molded article A was produced in the same manner as in Example 2, except that B-3 was used instead of B-1.

### (Example 5)

A molded article A was produced in the same manner as in Example 1, except that the amount of EGMA-1 was changed to 25 parts by mass and the amount of B-1 was changed to 75 parts by mass.

### (Comparative Example 1)

A molded article A was produced in the same manner as in Example 2, except that EGMA-2 was used instead of EGMA-1.

### (Comparative Example 2)

EGMA-1 was heated at 190°C for 10 minutes using a vacuum press (IMC-19E6 type, manufactured by Imoto Machinery Co., Ltd.) and then cooled at 30°C for 5 minutes to produce a sheet-shaped molded article A having a thickness of 1.0 mm.

### (Comparative Example 3)

A molded article A was produced in the same manner as in Comparative Example 2, except that EGMA-2 was used instead of EGMA-1.

### 3. Production of Engineering Plastic Composition and Molded Articles B to E

### (Example 6)

Into the hopper port provided at barrel C1 of the twin-screw kneading extruder (KZW20TW, manufactured by Technovel Corporation), 90 parts by mass of polybutylene terephthalate (PBT) were fed from the main feeder and 10 parts by mass of the melt-kneaded product of EGMA-1:B-1 = 50:50 produced in Example 2 were fed from the sub-feeder. The nozzle head temperature was set to 260°C and the screw rotation speed was set to 300 rpm, and the PBT and the melt-kneaded product were melt-kneaded. The melt-kneaded product was discharged from the twin-screw extruder at a discharge rate of 5 kg/hour, and then cut with a pelletizer to obtain resin pellets of an engineering plastic composition containing PBT.

The produced resin pellets were heated at 260°C for 10 minutes using a vacuum press (IMC-19E6 type, manufactured by Imoto Machinery Co., Ltd.) and then cooled at 30°C for 5 minutes to produce a sheet-shaped molded article B having a thickness of 1.0 mm.

The produced resin pellets were injection-molded using an injection molding machine (SE100EV, manufactured by Sumitomo Heavy Industries, Ltd.) under conditions of a mold temperature of 80°C, a cylinder temperature of 260°C, and an injection speed of 15 mm/sec to produce a sheet-shaped molded article C having a thickness of 3.2 mm.

The produced resin pellets were injection-molded using an injection molding machine (SE100EV, manufactured by Sumitomo Heavy Industries, Ltd.) under conditions of a mold temperature of 80°C, a cylinder temperature of 260°C, and an injection speed of 30 mm/sec to produce a sheet-shaped molded article D having a thickness of 2.0 mm.

The produced resin pellets were injection-molded using an injection molding machine (SE100EV, manufactured by Sumitomo Heavy Industries, Ltd.) under conditions of a mold temperature of 80°C, a cylinder temperature of 260°C, and an injection speed of 100 mm/sec to produce a sheet-shaped molded article E having a thickness of 2.0 mm.

### (Example 7)

Molded articles B to E were produced in the same manner as in Example 6, except that 5 parts by mass of EGMA-1 and 5 parts by mass of B-1 were fed, instead of 10 parts by mass of the melt-kneaded product of EGMA-1:B-1 = 50:50 produced in Example 2.

### (Example 8)

Molded articles B to E were produced in the same manner as in Example 7, except that the amount of EGMA-1 was changed to 7.5 parts by mass and the amount of B-1 was changed to 2.5 parts by mass.

### (Example 9)

Molded articles B to E were produced in the same manner as in Example 7, except that B-2 was used instead of B-1.

### (Example 10)

Molded articles B to E were produced in the same manner as in Example 7, except that B-3 was used instead of B-1.

### (Comparative Example 4)

Molded articles B to E were produced in the same manner as in Example 7, except that EGMA-2 was used instead of EGMA-1.

### (Comparative Example 5)

Molded articles B to E were produced in the same manner as in Example 7, except that the amount of EGMA-1 was changed to 10 parts by mass and the amount of B-1 was changed to 0 parts by mass.

### (Comparative Example 6)

Molded articles B to E were produced in the same manner as in Comparative Example 5, except that EGMA-2 was used instead of EGMA-1.

### 4. Evaluation

### [Dielectric Loss Tangent Evaluation]

Test pieces having a length of 100 mm, a width of 1.5 mm, and a thickness of 1.0 mm were produced from each of molded articles A and B. The dielectric loss tangent of these test pieces at 1 GHz and under a 23°C atmosphere was measured by the cylindrical cavity resonator method using a cylindrical cavity resonator (manufactured by EM Lab Co., Ltd.) and a network analyzer N5290A (manufactured by Keysight Technologies, Inc.). The measurement results are shown in Tables 1 and 2.

### [Izod Impact Test]

Notched test pieces having a length of 63.5 mm, a width of 12.7 mm, and a thickness of 3.2 mm were produced from molded article C. Using these test pieces, the Izod impact strength (kJ/m²) was measured at 23°C by an Izod impact test in accordance with ASTM D-256. The measurement results are shown in Table 2.

### [Tensile Test]

Test pieces for tensile testing in accordance with ASTM D638 Type 1 were produced from molded article C. Using the produced test pieces, a tensile test was performed at 23°C at a tensile speed of 1 mm/min to measure the tensile modulus (MPa). In addition, a tensile test was performed at 23°C at a tensile speed of 50 mm/min to measure the tensile elongation at break (%). The measurement results are shown in Table 2.

### [Bending Test]

Test pieces having a length of 127 mm, a width of 12.7 mm, and a thickness of 3.2 mm were produced from molded article C, and the flexural strength (MPa) and flexural modulus (MPa) were measured at 23°C by a bending test in accordance with JIS-K7203 (ASTM-D-790) using a dual bending tester (RTF-1350-2M, manufactured by A&D Company, Limited). The measurement results are shown in Table 2.

### [Peel Test]

In molded articles D and E, cuts were made with a cutter near the resin inlet to form a grid of 100 squares, each 2 mm × 2 mm. Cellotape (registered trademark, manufactured by Nichiban Co., Ltd.) was applied to the cut area. The Cellotape was peeled off vigorously, and the number of squares peeled off out of 100 squares (number of peeled squares) was measured. A smaller number of peeled squares means that the appearance of the molded article is superior. The measurement results are shown in Table 2.

**[Table 1]**

| | | Example 1 | Example 2 | Example 3 | Example 4 | Example 5 | Comparative Example 1 | Comparative Example 2 | Comparative Example 3 |
|---|---|---|---|---|---|---|---|---|---|
| Olefin-based copolymer A | EGMA-1 | 75 | 50 | 50 | 50 | 25 | - | 100 | - |
| | EGMA-2 | - | - | - | - | - | 50 | - | 100 |
| Olefin-based copolymer B | B-1 | 25 | 50 | - | - | 75 | 50 | - | - |
| | B-2 | - | - | 50 | - | - | - | - | - |
| | B-3 | - | - | - | 50 | - | - | - | - |
| Dielectric loss tangent | | 0.0057 | 0.0041 | 0.0041 | 0.0041 | 0.0021 | 0.0086 | 0.0076 | 0.0174 |

**[Table 2]**

| | | Example 6 | Example 7 | Example 8 | Example 9 | Example 10 | Example 11 | Comparative Example 4 | Comparative Example 5 | Comparative Example 6 |
|---|---|---|---|---|---|---|---|---|---|---|
| Melt-kneaded product of EGMA-1 and B-1 | | 10 | - | - | - | - | - | - | - | - |
| Olefin-based copolymer A | EGMA-1 | - | 5 | 7.5 | 5 | 5 | 2.5 | - | 10 | - |
| | EGMA-2 | - | - | - | - | - | - | 5 | - | 10 |
| Olefin-based copolymer B | B-1 | - | 5 | 2.5 | - | - | 7.5 | 5 | - | - |
| | B-2 | - | - | - | 5 | - | - | - | - | - |
| | B-3 | - | - | - | - | 5 | - | - | - | - |
| Engineering plastic | PBT | 90 | 90 | 90 | 90 | 90 | 90 | 90 | 90 | 90 |
| Izod (kJ/m²) | | 35 | 30 | 11 | 12 | 7.8 | 33 | 43 | 7.1 | 8.5 |
| Tensile modulus (MPa) | | 1980 | 2080 | 2240 | 1960 | 2190 | 2040 | 2040 | 2150 | 2010 |
| Tensile elongation at break (%) | | 61 | 71 | 41 | 32 | 30 | 36 | 64 | 45 | 79 |
| Flexural modulus (MPa) | | 1950 | 2030 | 2270 | 2040 | 2280 | 2060 | 2180 | 2070 | 1980 |
| Flexural strength (MPa) | | 69 | 72 | 78 | 72 | 79 | 72 | 76 | 74 | 71 |
| Peel test | Molded article D | 0 | 0 | 0 | 0 | 0 | 0 | 0 | 0 | 0 |
| | Molded article E | 0 | 0 | 0 | 0 | 0 | 61 | 0 | 0 | 0 |
| Dielectric loss tangent | | 0.0052 | 0.0052 | 0.0052 | 0.0052 | 0.0052 | 0.0051 | 0.0056 | 0.0056 | 0.0068 |

## Claims

1. A composition comprising an olefin-based copolymer A and an olefin-based copolymer B,
wherein the olefin-based copolymer A has a main chain comprising a monomer unit a derived from an olefin monomer having 2 to 8 carbon atoms and a monomer unit b having a glycidyl group, and, based on the mass of the olefin-based copolymer A, the proportion of the monomer unit a is 94% by mass or more and the proportion of the monomer unit b is less than 6% by mass,
the olefin-based copolymer B has a monomer unit derived from an olefin monomer having 2 to 8 carbon atoms, and
the content of the olefin-based copolymer A is 20% by mass or more and 99% by mass or less, based on the total mass of the olefin-based copolymer A and the olefin-based copolymer B.

2. The composition according to Claim 1, wherein the content of the olefin-based copolymer A is 30 to 99% by mass, based on the total mass of the olefin-based copolymer A and the olefin-based copolymer B.

3. The composition according to Claim 1, wherein the monomer unit a is a monomer unit derived from ethylene, a monomer unit derived from an α-olefin, or a combination thereof.

4. The composition according to Claim 1, wherein the monomer unit a is a monomer unit derived from ethylene.

5. The composition according to Claim 1, wherein the monomer unit b is a monomer unit derived from an unsaturated carboxylic acid glycidyl ester, a monomer unit derived from a glycidyl ether having an unsaturated group, or a combination thereof.

6. The composition according to Claim 1, wherein the monomer unit b is a monomer unit derived from glycidyl (meth)acrylate.

7. The composition according to Claim 1, wherein the olefin-based copolymer B consists of a monomer unit derived from ethylene and a monomer unit derived from an olefin monomer having 3 to 8 carbon atoms.

8. The composition according to Claim 1, wherein the olefin-based copolymer B consists of a monomer unit derived from ethylene and a monomer unit derived from an olefin monomer having 5 to 8 carbon atoms.

9. The composition according to Claim 1, wherein the density of the olefin-based copolymer B is less than 0.910 g/cm³.

10. A method for producing the composition according to any one of Claims 1 to 9, the method comprising a step of melt-kneading the olefin-based copolymer A and the olefin-based copolymer B.

11. A resin pellet comprising the composition according to any one of Claims 1 to 9.

12. A modifier for engineering plastic, comprising the composition according to any one of Claims 1 to 9.

13. An engineering plastic composition comprising:
the composition according to any one of Claims 1 to 9; and
an engineering plastic.

14. A molded article comprising the engineering plastic composition according to Claim 13.

15. The molded article according to Claim 14, which is a member of an automobile part.

16. The molded article according to Claim 14, which is a member of an electrical/electronic component.
